# EUROPEAN PATENT APPLICATION

(11) **EP 4 381 954 A1**
(43) Date of publication of application: **12.06.2024**
(21) Application number: 23212096.4
(22) Date of filing: 24.11.2023
(51) Int. Cl.: A23G 9/22, A23G 9/24, A23G 9/28, A23G 9/42, A23G 9/44, A23G 9/48

(54) **PRODUCTION OF A FOOD PRODUCT**

(30) Priority: 05.12.2022 DE 102022132251
(71) Applicant: L'AIR LIQUIDE, SOCIETE ANONYME POUR L'ETUDE ET L'EXPLOITATION DES PROCEDES GEORGES CLAUDE, 75007 Paris (FR); Air Liquide Deutschland GmbH, 40235 Düsseldorf (DE)
(72) Inventor: Kinghorst, Fabian, 40235 Düsseldorf (DE); Gottowik, Frank, 40235 Düsseldorf (DE)
(74) Representative: Air Liquide

(57) **Abstract**

Process for producing a food product (2), comprising the following process steps:
a) introducing ice cream (8) into a cup (9), so that the ice cream (8) occupies a lower region (11) of the cup (9),
b) introducing a specified quantity of liquid coolant (14) into a metering container (12),
c) after completion of process steps a) and b), introducing the coolant (14) from the metering container (12) into the cup (9), so that the coolant (14) cools a top side (15) of the ice cream (8) in the cup (9), and
d) after completion of process step c), introducing an at least partially melted garnishing substance (17) into the cup (9), so that a solid garnishing layer (18) composed of the garnishing substance (17) is formed on the top side (15) of the ice cream (8) as a result of hardening of the garnishing substance (17).

## Description

The invention relates to a process and an apparatus for producing a food product, in particular a dessert, which comprises ice cream with a garnishing layer in a cup.

It is known to sell, for example, ice cream in a disposable cup. The disposable cup holds one portion of the ice cream, which can be eaten directly from the disposable cup. It is also known that the ice cream is covered with a garnishing layer, for example a chocolate layer.

To produce such food products, the ice cream is introduced into the disposable cup followed by introduction of a melted garnishing substance. The garnishing layer composed of the garnishing substance is formed on the top side of the ice cream as a result of hardening of the garnishing substance. However, there is the problem of the garnishing substance having a higher temperature than the top side of the ice cream during introduction into the disposable cup. This can melt the ice cream, starting from the top side. Melted ice cream can mix with the melted garnishing substance and even reach the top side of the garnishing substance. As a result, some of the ice cream may be visible on the garnishing layer. This is aesthetically undesirable.

Proceeding from the described prior art, it is an object of the present invention to propose a way of producing the described type of food product, in which there is no penetration or at least less penetration of the garnishing layer by the ice cream.

This object is achieved with the process and the apparatus according to the independent claims. Further advantageous embodiments are specified in the dependent claims. The features illustrated in the claims and in the description are combinable with one another in any technologically meaningful manner.

According to the invention, a process for producing a food product is proposed. The process comprises the following process steps:
a) introducing ice cream into a cup, so that the ice cream occupies a lower region of the cup,
b) introducing a specified quantity of liquid coolant into a metering container,
c) after completion of process steps a) and b), introducing the coolant from the metering container into the cup, so that the coolant cools a top side of the ice cream in the cup, and
d) after completion of process step c), introducing an at least partially melted garnishing substance into the cup, so that a solid garnishing layer composed of the garnishing substance is formed on the top side of the ice cream as a result of hardening of the garnishing substance.

The food product is preferably a dessert. The described process can, however, also be used to produce other food products comprising ice cream. The food product is preferably of such a size that it is one portion for one person. However, the size of the food product is irrelevant to carrying out the described process.

The food product produced by means of the described process comprises a cup containing ice cream and a garnishing layer on top. In the finished food product, the ice cream and the garnishing layer on top are both entirely inside the cup. The cup can be a disposable cup, for example one made of plastic or paper fibres. It is, however, also conceivable to apply the described process to reusable cups made of any material. The top side of the cup has an opening. Preferably, the opening is sealed with a lid in the finished food product. The lid can, for example, be made of aluminium, plastic or paper fibres. By means of the lid, the cup is preferably hygienically sealed in such a way that the food product can be sold without any further packaging. The consumer can pull off the lid to open it and consume the ice cream with the garnishing substance directly from the cup. It is, however, also conceivable that the food product does not comprise a lid and is, for example, consumed immediately after production or sold with further packaging.

The process comprises process steps a) to d). Unless otherwise specified, said process steps can be carried out in any order. In what follows, process steps a) to d) are described for one cup. It is preferred that a multiplicity of cups successively passes through steps a) to d). In this case, process steps a) to d) can be carried out simultaneously in that, for example, process step c) is carried out with a first cup, whereas process step a) is still being carried out with a second cup. Particularly preferably, process steps a) to d) are carried out in a respective cycle time. If the process comprises one or more of the further process steps described as optional in what follows, what has been stated here is correspondingly applicable thereto.

In process step a), ice cream is introduced into a cup, so that the ice cream occupies a lower region of the cup. The ice cream is preferably introduced into the cup from above through the opening. During introduction, the ice cream is preferably of such a consistency that it can be transported through pipelines and can be distributed in the cup. This is especially the case when the ice cream is liquid. However, it is sufficient that the ice cream is viscous. In process step a), one portion of the ice cream is preferably introduced into the cup. In particular, it is preferred that, in process step a), the quantity of the ice cream that is to have the finished food product is introduced into the cup.

In process step b), a specified quantity of liquid coolant is introduced into a metering container. The specified quantity of the coolant is separated as a result. This separated quantity of the coolant is assigned to the cup with which the presently described process steps a) to d) are carried out. In process step b), the specified quantity of the liquid coolant can be introduced into the metering container in such a way that and separated in that the coolant is, for example, introduced into the metering container up to a specified fill level. Reaching of the specified fill level can be detected automatically.

The coolant is liquid. Thus, at least during introduction into the cup, the coolant is present under conditions in which it is liquid. Under standard conditions, the coolant is by contrast preferably gaseous. During the process, the coolant can evaporate.

Process steps a) and b) can be carried out in any order one after the other or with complete or partial overlap. After completion of process steps a) and b), process step c) is carried out. This involves introducing the coolant from the metering container into the cup, so that the coolant cools a top side of the ice cream in the cup. Thus, in process step c), what is introduced into the cup is the quantity of the coolant that was separated beforehand for said cup in step b). In process step c), the coolant is preferably introduced into the cup from above through the opening.

As a result of process step c), the top side of the ice cream is cooled. The cooling effect is greatest at the surface of the ice cream and decreases downwards. This cooling effect stabilizes the top side of the ice cream.

After completion of process step c), process step d) is carried out. This involves introducing an at least partially melted garnishing substance into the cup, so that a solid garnishing layer composed of the garnishing substance is formed on the top side of the ice cream as a result of hardening of the garnishing substance. In process step d), the garnishing substance is preferably introduced into the cup from above through the opening. The garnishing layer is a foodstuff which differs from the ice cream. Owing to the garnishing layer, the food product has in addition to the ice cream a further component with its own taste. Moreover, the garnishing layer has a visual effect. The garnishing substance can be in a partially melted state by, for example, solid pieces being present in an otherwise melted substance. For example, the garnishing substance can be a nougat cream containing chocolate pieces. In process step d), said garnishing substance can be in a partially melted state in that the nougat cream is in a melted state, whereas the chocolate pieces are still solid.

In process step d), the garnishing substance is preferably introduced into the cup at a temperature in the range from 30°C to 60°C. Such a temperature might in principle cause partial melting of the top side of the ice cream. As described in relation to the prior art, this might cause penetration of the garnishing layer by the ice cream. However, this can be prevented or in any case limited by the stabilization of the top side of the ice cream according to process step c). Since the temperature of the ice cream at the top side is lowered by process step c), the garnishing substance does not so easily cause partial melting of the ice cream. As a result, penetration of the garnishing layer by the ice cream can thus be prevented. Whether this is actually achieved can especially depend on the temperature of the top side of the ice cream before process step c), on the type, temperature and quantity of the coolant used in process step c), on the resultant temperature of the top side of the ice cream after process step c), and on the type, temperature and quantity of the garnishing substance used in process step d). These parameters are preferably chosen such that the ice cream does not penetrate the garnishing layer. However, there is already an improvement over the prior art when the there is less penetration of the garnishing layer by the ice cream. This is achieved in any case by process step c) regardless of the stated influences.

The extent to which penetration of the garnishing layer by the ice cream can be prevented depends particularly on the quantity of the coolant used for process step c). Accurate metering of the coolant has therefore been found to be particularly advantageous. If too little coolant were to be used, the desired effect would not occur or would only occur to an insufficient extent. If too much coolant were to be used, the garnishing substance might harden before it has distributed over the top side of the ice cream. Moreover, an excessive volume of the coolant can cause problems, especially if the coolant evaporates. Furthermore, using too much coolant is energy-inefficient. Process steps b) and c) can achieve particularly accurate metering of the coolant. This is aided especially by the use of a metering container. As a result, the desired quantity of the coolant can be separated in a simple and reliable manner and then used for process step c). The optimal quantity of the coolant can be determined by experiments.

Preferably, particularly accurate metering of the coolant can be achieved by the metering container being a metering tub. In this case, the coolant can be introduced into the cup in process step c) by tipping the metering tub in such a way that the contents of the metering tub reach the cup.

The process preferably further comprises the following process step, which is carried out after completion of process step d):
e) sealing the cup with a lid.

The lid preferably seals the opening at the top side of the cup, through which the ice cream, the coolant and the garnishing substance have been introduced into the cup. It is through this opening that the consumer can consume the ice cream with the garnishing layer.

In a preferred embodiment of the process, the cup has a volume in the range between 30 and 500 ml, in particular in the range between 50 and 200 ml.

The food product is preferably one portion for one person. In this embodiment, this is quantified via the size of the cup and thus also of the food product.

In a further preferred embodiment of the process, the coolant is pressurelessly introduced into the cup in process step c).

Especially preferably, the coolant can be pressurelessly introduced into the cup by the metering container being a metering tub. In general, it has been found that coolant can be metered in a particularly simple and accurate manner when it is pressurelessly introduced into the cup. In particular, nozzles, which represent a potential source of error, can be dispensed with for the pressureless introduction of the coolant into the cup. Precise metering of the coolant by means of a nozzle is especially more difficult because the quantity of the coolant that is dispensed by a nozzle depends not only on the flow cross section of the nozzle, but also on the pressure of the coolant and hence on the flow rate. If the coolant is provided pressurelessly, pressure fluctuations in a coolant supply line cannot have any influence.

In a further preferred embodiment of the process, the coolant is nitrogen.

Alternatively, the coolant can, for example, be carbon dioxide.

In a further preferred embodiment, the process further comprises the following process step, which is carried out between process steps c) and d):
c') straightening the top side of the ice cream in the cup.

The top side of the ice cream can, for example, be straightened with a stamp. Process step c') can eliminate or at least reduce irregularities in the top side of the ice cream that arose when introducing the ice cream in process step a) and/or when introducing the coolant in process step c). A more aesthetic finished food product can be obtained as a result of the straightening of the top side of the ice cream.

In a further preferred embodiment of the process, the garnishing substance contains chocolate and/or nougat.

Especially in this embodiment, it is preferred that the garnishing substance is introduced into the cup at a temperature in the range from 30°C to 60°C in process step d).

In a further preferred embodiment of the process, the solid garnishing layer covers the entire top side of the ice cream after completion of process step d).

The fact that the garnishing layer covers the entire top side of the ice cream after completion of process step d) can be specified as a boundary condition for the desired configuration of the food product. The described process is a way of producing the food product under this boundary condition as well.

In a further aspect of the invention, an apparatus for producing a food product is proposed. The apparatus comprises:
- a filling station having a device for introducing ice cream into a cup when the cup is situated in the filling station, so that the ice cream occupies a lower region of the cup,
- a coolant station having a metering container and a device for introducing a specified quantity of liquid coolant into the metering container, wherein the coolant station is adapted to introduce the coolant from the metering container into the cup when the cup is situated in the coolant station, so that the coolant cools a top side of the ice cream in the cup,
- a garnishing station having a device for introducing a melted garnishing substance into the cup when the cup is situated in the garnishing station, so that a solid garnishing layer composed of the garnishing substance is formed on the top side of the ice cream as a result of hardening of the garnishing substance, and
- a transport device which is adapted to allow passage of the cup through the filling station, the coolant station and the garnishing station in the order specified.

The advantages and features of the process are applicable and transferable to the apparatus, and vice versa. The apparatus is preferably adapted for operation according to the process. The process is preferably performed with the apparatus.

The filling station serves process step a). The coolant station serves process steps b) and c). The garnishing station serves process step d).

The apparatus preferably further comprises a straightening station having a stamp for straightening the top side of the ice cream in the cup when the cup is situated in the straightening station. The straightening station serves process step c'). In this case, the transport device is adapted to allow passage of the cup through the straightening station between the coolant station and the garnishing station.

The apparatus preferably further comprises a lid station having a device for sealing the cup with a lid. The lid station serves process step e). In this case, the transport device is adapted to allow passage of the cup through the lid station after the garnishing station.

The invention will now be more particularly elucidated with reference to the figure. The figure shows a particularly preferred exemplary embodiment but the invention is not limited thereto. The figure and the relative sizes represented therein are only schematic. In the figure:

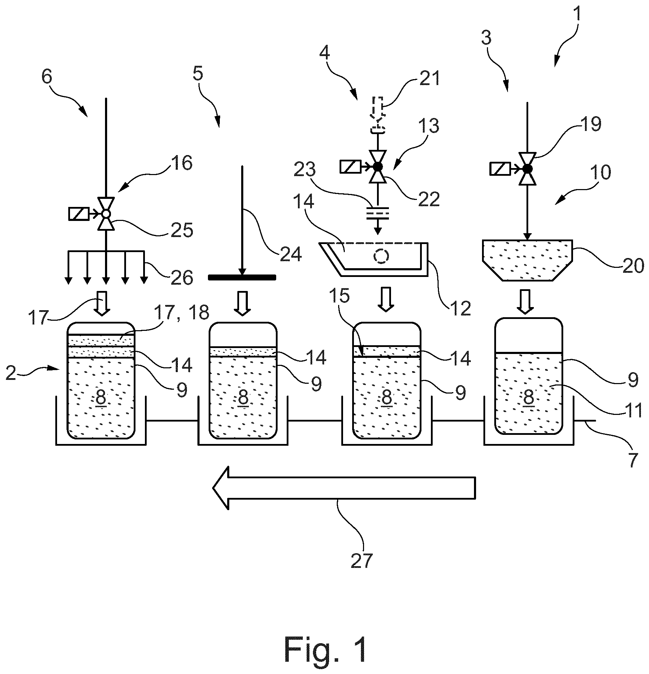

Fig. 1: shows an apparatus according to the invention for producing a food product.

Fig. 1 shows an apparatus 1 for producing a food product 2. The apparatus 1 comprises a filling station 3, a coolant station 4, a straightening station 5 and a garnishing station 6. In addition, the apparatus 1 comprises a transport device 7 which is adapted to allow passage of a cup 9 through the filling station 3, the coolant station 4, the straightening station 5 and the garnishing station 6 in the order specified. The cup 9 is moved in a transport direction 27. In Fig. 1, a cup 9 is shown in each of the stations.

After the cup 9 has left the garnishing station 6, the food product 2 is finished. The cup 9 is part of the finished food product 2. In addition, the food product 2 comprises ice cream 8, arranged in the cup 9, with a solid garnishing layer 18 composed of a garnishing substance 17. The garnishing substance 17 can, for example, contain chocolate and/or nougat. The cup 9 has a volume in the range between 50 and 500 ml.

The filling station 3 has a device 10 for introducing the ice cream 8 into the cup 9 when the cup 9 is situated in the filling station 3, so that the ice cream 8 occupies a lower region 11 of the cup 9. Said device 10 comprises a valve 19 and a fill head 20. Via the valve 19 and the fill head 20, the ice cream 8 can be metered into the cup 9.

The coolant station 4 has a metering container 12 and a device 13 for introducing a specified quantity of liquid coolant 14 into the metering container 12. Said device 13 comprises a coolant supply 21, a valve 22 and an aperture 23. Via the coolant supply 21, the valve 22 and the aperture 23, the liquid coolant 14 can be metered into the metering container 12. The coolant station 4 is adapted to introduce the coolant 14 from the metering container 12 into the cup 9 when the cup 9 is situated in the coolant station 4, so that the coolant 14 cools a top side 15 of the ice cream 8 in the cup 9. This is indicated schematically in Fig. 1 in that this shows the coolant 14 as a layer at the top side 15 of the ice cream 8 in the cup 9. In fact, it is possible that the coolant 14 cools the top side 15 of the ice cream 8 and, in doing so, evaporates. The coolant 14 can also completely or partially penetrate into the ice cream 8. The coolant 14 can, for example, be nitrogen.

The straightening station 5 comprises a stamp 24 for straightening the top side 15 of the ice cream 8 in the cup 9 when the cup 9 is situated in the straightening station. In this respect as well, it should be noted that the coolant 14 is depicted as a layer in Fig. 1 only for schematic reasons.

The garnishing station 6 has a device 16 for introducing the at least partially melted garnishing substance 17 into the cup 9 when the cup 9 is situated in the garnishing station 6, so that a solid garnishing layer 18 composed of the garnishing substance 17 is formed on the top side 15 of the ice cream 8 as a result of hardening of the garnishing substance 17. Said device 16 comprises a valve 25 and a fill head 26. In this respect as well, it should be noted that the coolant 14 is depicted as a layer between the top side 15 of the ice cream 8 and the garnishing layer 18 in Fig. 1 only for schematic reasons.

The apparatus 1 makes it possible to carry out a process for producing the food product 2 that comprises the following process steps:
a) introducing the ice cream 8 into the cup 9 in the filling station 3, so that the ice cream 8 occupies the lower region 11 of the cup 9,
b) introducing a specified quantity of liquid coolant 14 into the metering container 12 in the coolant station 4,
c) after completion of process steps a) and b), pressurelessly introducing the coolant 14 from the metering container 12 into the cup 9 in the coolant station 4, so that the coolant 14 cools the top side 15 of the ice cream 8 in the cup 9,
c') after completion of process step c), straightening the top side 15 of the ice cream 8 in the cup 9 in the straightening station 5, and
d) after completion of process step c'), introducing the melted garnishing substance 17 into the cup 9 in the garnishing station 6, so that the solid garnishing layer 18 composed of the garnishing substance 17 is formed on the top side 15 of the ice cream 8 as a result of hardening of the garnishing substance 17.

### List of reference symbols

- 1: Apparatus
- 2: Food product
- 3: Filling station
- 4: Coolant station
- 5: Straightening station
- 6: Garnishing station
- 7: Transport device
- 8: Ice cream
- 9: Cup
- 10: Device
- 11: Lower region
- 12: Metering container
- 13: Device
- 14: Coolant
- 15: Top side
- 16: Device
- 17: Garnishing substance
- 18: Garnishing layer
- 19: Valve
- 20: Fill head
- 21: Coolant supply
- 22: Valve
- 23: Aperture
- 24: Stamp
- 25: Valve
- 26: Fill head
- 27: Transport direction

## Claims

1. Process for producing a food product (2), comprising the following process steps:
a) introducing ice cream (8) into a cup (9), so that the ice cream (8) occupies a lower region (11) of the cup (9),
b) introducing a specified quantity of liquid coolant (14) into a metering container (12),
c) after completion of process steps a) and b), introducing the coolant (14) from the metering container (12) into the cup (9), so that the coolant (14) cools a top side (15) of the ice cream (8) in the cup (9), and
d) after completion of process step c), introducing an at least partially melted garnishing substance (17) into the cup (9), so that a solid garnishing layer (18) composed of the garnishing substance (17) is formed on the top side (15) of the ice cream (8) as a result of hardening of the garnishing substance (17).

2. Process according to Claim 1, wherein the cup (9) has a volume in the range between 30 and 500 ml.

3. Process according to either of the preceding claims, wherein the coolant (14) is pressurelessly introduced into the cup (9) in process step c).

4. Process according to any of the preceding claims, wherein the coolant (14) is nitrogen.

5. Process according to any of the preceding claims, further comprising the following process step, which is carried out between process steps c) and d):
c') straightening the top side (15) of the ice cream (8) in the cup (9).

6. Process according to any of the preceding claims, wherein the garnishing substance (17) contains chocolate and/or nougat.

7. Process according to any of the preceding claims, wherein the solid garnishing layer (18) covers the entire top side (15) of the ice cream (8) after completion of process step d).

8. Apparatus (1) for producing a food product (2), comprising:
- a filling station (3) having a device (10) for introducing ice cream (8) into a cup (9) when the cup (9) is situated in the filling station (3), so that the ice cream (8) occupies a lower region (11) of the cup (9),
- a coolant station (4) having a metering container (12) and a device (13) for introducing a specified quantity of liquid coolant (14) into the metering container (12), wherein the coolant station (4) is adapted to introduce the coolant (14) from the metering container (12) into the cup (9) when the cup (9) is situated in the coolant station (4), so that the coolant (14) cools a top side (15) of the ice cream (8) in the cup (9),
- a garnishing station (6) having a device (16) for introducing an at least partially melted garnishing substance (17) into the cup (9) when the cup (9) is situated in the garnishing station (6), so that a solid garnishing layer (18) composed of the garnishing substance (17) is formed on the top side (15) of the ice cream (8) as a result of hardening of the garnishing substance (17), and
- a transport device (7) which is adapted to allow passage of the cup (9) through the filling station (3), the coolant station (4) and the garnishing station (6) in the order specified.
